## Europäisches Patentamt

## European Patent Office

## Office européen des brevets

(19)

(11) Veröffentlichungsnummer: **0 010 689 B1**

(12) **EUROPÄISCHE PATENTSCHRIFT**

(45) Veröffentlichungstag der Patentschrift:
**12.08.81**

(51) Int. Cl.³: **G 11 B 5/84,** G 11 B 5/68,
B 05 D 5/12

(21) Anmeldenummer: **79104015.7**

(22) Anmeldetag: **18.10.79**

(54) Verfahren zur Herstellung von Schichtmagnetogrammträgern.

(30) Priorität: **26.10.78 DE 2846623**

(43) Veröffentlichungstag der Anmeldung:
**14.05.80 Patentblatt 80/10**

(45) Bekanntmachung des Hinweises auf die Patenterteilung:
**12.08.81 Patentblatt 81/32**

(84) Benannte Vertragsstaaten:
**DE FR GB NL**

(56) Entgegenhaltungen:
**DD-A-32 145**
**DE-B-1 186 906**
**DE-C-2 119 569**

(73) Patentinhaber: **BASF Aktiengesellschaft,
Carl-Bosch-Strasse 38, D-6700 Ludwigshafen (DE)**

(72) Erfinder: **Motz, Herbert, Dr., Kinzigstrasse 9,
D-7601 Willstaett (DE)**
Erfinder: **Schaefer, Dieter, Dr., Dipl.-Chem.,
Hauptstrasse 173, D-6731 Lindenberg (DE)**
Erfinder: **Huebner, Werner, Dr., Hauptstrasse 48C,
D-6710 Frankenthal (DE)**
Erfinder: **Mayer, Dieter, Dr., Berner Weg 28,
D-6700 Ludwigshafen (DE)**

## Verfahren zur Herstellung von Schichtmagnetogrammträgern

Die Erfindung betrifft ein Verfahren zur Herstellung von Schichtmagnetogrammträgern, bestehend aus einem unmagnetischen Trägermaterial und mindestens einer darauf haftfest aufgebrachten Schicht aus einem in einem organischen Polymerbindemittel feinverteilten anisotropen magnetischen Material.

Bei den üblichen Verfahren zur Herstellung von Schichtmagnetogrammträgern werden die nadelförmigen magnetischen Materialien zusammen mit Hilfsstoffen, wie z. B. Dispergierhilfsmittel, Antistatika, Gleitmittel und unmagnetischen Zusatzstoffen, in einer Lösung eines organischen Polymerbindemittels in organischen Lösungsmitteln dispergiert. Je feiner und einheitlicher die Verteilung der magnetischen Teilchen in der Mischung ist, um so vorteilhafter ist dies für die elektroakustischen und mechanischen Eigenschaften der Magnetschicht. Es ist bekannt, daß sich die magnetischen Teilchen, einerseits infolge ihrer magnetischen Anziehung und andererseits wegen ihrer Nadelform nur schwer in einer flüssigen Phase verteilten lassen und bereits nach kurzer Lagerzeit zur Flokkulation und Agglomeration neigen. Außerdem wird durch das gegenüber üblichen Füllstoffen hohe spezifische Gewicht des eingesetzten magnetischen Materials die Phasentrennung noch begünstigt. Alle diese Erscheinungen äußern sich bei den aus solchen Dispersionen hergestellten Magnetschichten in einer Verschlechterung der magnetischen und elektroakustischen Eigenschaften sowie in einer Erhöhung der Rauhigkeit der Oberfläche, was wiederum die mechanischen Eigenschaften, wie den Abrieb, negativ beeinflussen kann.

Es hat daher nicht an Versuchen gefehlt, durch geeignete chemische und physikalische Hilfsmittel die Dispergierung des nadelförmigen magnetischen Materials zu verbessern. Aus diesem Grunde ist schon mehrfach vorgeschlagen worden, bereits den flüssigen Magnetschichtmischungen zu Beginn des Dispergiervorganges Dispergierhilfsmittel zur leichteren Verteilung des magnetischen Materials in der Bindemittelphase zuzusetzen. Hierfür werden in erster Linie oberflächenaktive Substanzen eingesetzt, deren Molekülstrukturen einen hydrophilen und einen hydrophoben Rest aufweisen und deren wirksame Struktur anionischen, kationischen, amphoteren oder nichtionischen Charakter besitzt. Diese Dispergierhilfsmittel erfordern eine sehr sorgfältige Abstimmung der angewandten Menge auf die Gesamtrezeptur, da es unter ungünstigen äußeren Bedingungen sehr leicht vorkommen kann, daß Überschüsse dieser Substanzen an die Oberfläche des Magnetogrammträgers austreten und dort Ablagerungen und Verschmutzungen der bandführenden Geräteteile verursachen, was äußerst unerwünscht ist. Bei den meisten Dispergierhilfsmitteln ist des weiteren festzustellen, daß bei Erreichen einer gewissen Konzentration, die einer Sättigungsbelegung der aktiven Zentren der Oberfläche des magnetischen Materials entspricht, eine weitere Verbesserung der Dispergierbarkeit und damit der erreichbaren Verdichtung und Ausrichtbarkeit der magnetischen Materialien nicht festgestellt werden kann.

Aus der DE-AS 1 186 906 ist bekannt, durch inniges Vermischen von Eisenoxidpulver mit einer Trägerflüssigkeit eine steife Paste herzustellen, die dann durch gleichmäßiges Kneten in ein büschelfreies Gemisch überführt wird. Durch Vermischen dieser Paste mit Bindemitteln wird dann eine Dispersion hergestellt, die Magnetschichten mit erhöhten Pigmentanteil ergeben. Nachteilig an dem Verfahren ist jedoch, daß sich auf diese Weise nicht in gleichem Maße die magnetische Ausrichtbarkeit der nadelförmigen magnetischen Materialien verbessern läßt.

Außerdem wird mit der genannten Maßnahme nicht das Problem der Reagglomeration dieser Dispersionen bei Lagerung oder Transport bereinigt. Es wurde deshalb in der DE-PS 2 119 569 vorgeschlagen, die bereits fertige Dispersion mit magnetischem Material, am zweckmäßigsten unmittelbar vor dem Auftrag auf das Trägermaterial einer Scherbeanspruchung zu unterwerfen, indem man die Magnetdispersion durch einen Ringspalt schickt, der zwischen der Innenwand eines zylinderförmigen Rührgefäßes und dem Umfang einer darin rotierenden Scheibe oder eines darin rotierenden Zylinders gebildet ist. Als Scheibe wird üblicherweise eine Dissolverscheibe verwandt, die am Rande sägezahnförmige Zacken aufweist. Der erzielbare Effekt ist jedoch gering. Bei einer Steigerung der Drehzahl der Scheibe oder des Zylinders entstehen jedoch unerwünschte Inhomogenitäten in der Magnetdispersion.

Die geschilderten Maßnahmen zur Verbesserung des Verteilungsgrades des nadelförmigen, magnetischen Materials im schichtbildendem Bindemittelsystem reichen jedoch nicht aus, sowohl die Homogenität als auch vor allem die Stabilität der Dispersion zu gewährleisten. Gerade bei der großtechnischen Herstellung von Schichtmagnetogrammträgern müssen jedoch die hierfür eingesetzten Dispersionen eine ausreichende Lagerfähigkeit besitzen, ohne daß bei den damit produzierten Aufzeichnungsträgern Einbußen bei den elektroakustischen und mechanischen Eigenschaften eintreten.

Es war daher Aufgabe der Erfindung, Verfahren für die Herstellung von Schichtmagnetogrammträgern bereitzustellen, bei denen sich die angegebenen Nachteile vermeiden lassen und insbesondere bestand die Aufgabe, daß sich die bei der Herstellung der Schichtmagnetogrammträger eingesetzten Dispersionen der nadelförmigen magnetischen Materialien in der Lösung der organischen Polymerbindemittel durch eine besonders homogene Verteilung der magnetisierbaren Teilchen in der flüssigen Phase und vor allem durch eine verbesserte Stabilität gegen Reagglomeration auszeichnen.

Überraschenderweise wurde nun gefunden, daß sich bei einem Verfahren zur Herstellung von Schichtmagnetogrammträgern durch Dispergieren einer Mischung von feinteiligen anisotropem magnetischem Material und Zusatzstoffe in einer Lösung eines Polymerbindemittels in organischen Lösungsmitteln, schichtförmiges Auftragen der Dispersion auf ein nichtmagnetisierbares Trägermaterial, Ausrichten des anisotropen magnetischen Materials mittels eines Magnetfeldes und Trocknen der aufgebrachten Schicht, die Aufgabe lösen und die Nachteile vermeiden lassen, wenn die Dispersion vor dem Auftragen auf das Trägermaterial auf Drücke zwischen 98 und 784 bar komprimiert und unmittelbar danach über Ventile unter gleichmäßigem Aufprallen auf ein Strömungshindernis entspannt wird. In bevorzugter Weise sind die Ventile als Düse oder Ringspalt ausgebildet.

Zusammensetzung und Herstellung der Dispersion entspricht dem an sich Bekannten.

Als magnetisch anisotrope Materialien werden bevorzugt feinteiliges, nadelförmiges Gamma-Eisen(III)-oxid mit einer durchschnittlichen Teilchenlänge von 0,1 bis 2 µm und insbesondere von 0,1 bis 0,9 µm oder nadelförmiges Chromdioxid der gleichen Teilchenstruktur, wie beim Eisenoxid angegeben, verwendet. Weitere geeignete Materialien sind Gamma-Eisen(III)-oxid mit Dotierungen von Schwermetallen, insbesondere von Kobalt sowie feinteilige Metallegierungen von Eisen, Kobalt und/oder Nickel.

Als Polymerbindemittel für die Dispersionen des feinteiligen, magnetisch anisotropen Materials können die für die Herstellung von Magnetschichten bekannten Bindemittel verwendet werden, wie in alkoholischen Lösungsmitteln lösliche Copolyamide, Polyvinylformale, Polyurethanelastomere, Mischungen von Polyisocyanaten und höhermolekularen Polyhydroxyverbindungen und Vinylchlorid-Polymerisate mit über 60% von Vinylchlorid-Molekülbausteinen, z. B. Vinylchlorid-Polymerisate mit Comonomeren, wie Vinylester von Monocarbonsäuren mit 2 bis 9 C-Atomen, Estern von aliphatischen Alkoholen mit 1 bis 9 C-Atomen und äthylenisch ungesättigten Carbonsäuren mit 3 bis 5 C-Atomen, wie die Ester der Acrylsäure, Methacrylsäure oder Maleinsäure, oder diesen Carbonsäuren selbst als Comonomere sowie hydroxylgruppenhaltige Vinylchlorid-Copolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyäthyl-(meth)-acrylat hergestellt werden können. Ferner sind als Bindemittel Abmischungen von Polyurethanelastomeren mit Polyvinylformalen, Phenoxyharzen und PVC-Copolymerisaten der angegebenen Zusammensetzung geeignet. Bevorzugte Bindemittel sind Polyvinylformal-Binder, Polyurethanelastomer-Abmischungen der genannten Art, vor allem mit Polyvinylformalen. Als Polyurethanelastomere-Binder werden handelsübliche elastomere Polyesterurethane aus Adipinsäure, 1,4-Butandiol und 4,4'-Diisocynatodiphenylmethan bevorzugt angewandt.

Als organische Lösungsmittel eignen sich für die Herstellung der Dispersion die hierfür bekannten organischen Lösungsmittel, insbesondere aromatische Kohlenwasserstoffe, wie Benzol, Toluol oder Xylol, Alkohole, wie Propanol oder Butanol, Ketone, wie Aceton oder Methyläthylketon, Äther, wie Tetrahydrofuran oder Dioxan sowie Gemische solcher Lösungsmittel und andere für Lackbindemittel übliche Lösungsmittel und Lösungsmittelgemische.

Den Dispersionen können weitere Zusatzstoffe zur Herstellung der Magnetschichten, wie andere auch als Dispergierhilfsmittel wirkende Verbindungen, beispielsweise Lecithine, geringe Monocarbonsäureanteile oder Gemische derselben, bei Chromdioxid bevorzugt Zinkoleat, -stearat, -isostearat sowie Füllstoffe, wie Ruß, Graphit, Quarzmehl und/oder nicht magnetisierbares Pulver auf Silikatbasis und Mittel zur Verbesserung des Verlaufs, wie geringe Mengen Siliconöl, zugesetzt werden. Diese Zusätze sollen zweckmäßigerweise insgesamt 12 Gew.-%, bevorzugt 8 Gew.-%, bezogen auf das Trockengewicht der Magnetschicht, nicht überschreiten.

Zur Herstellung der Dispersion wird das magnetische Material mit dem verwendeten Bindemittel und ausreichend Lösungsmittel in einer Dispergiermaschine, z. B. einer Topfkugelmühle oder einer Rührwerkskugelmühle, unter Zusatz der weiteren Zusatzstoffe, dispergiert. Zur Einstellung des zweckmäßigen Bindemittel-Pigment-Verhältnisses können dieser Mischung weitere Bindemittelanteile entweder in festem Zustand oder in Form von 10- bis 60%igen Lösungen zugegeben werden.

Die dabei erhaltene Dispersion wird nun in an sich bekannten speziellen Vorrichtungen, wie z. B. Hochdruckkolbenpumpen auf Drücke zwischen 98 und 784 bar, insbesondere auf 294 bis 588 bar komprimiert und anschließend durch ein als Düse oder Ringspalt ausgebildetes Ventil unter Aufprallen auf ein Strömungshindernis gepreßt, wobei eine spontane Entspannung auftritt. Neben der damit verbundenen Übertragung von Scherkräften wird durch die Beschleunigung im Ringspalt und der dadurch hervorgerufenen starken Abnahme des auf der Dispersion lastenden äußeren Druckes der Vorgang der Kavitation ausgelöst. Hohe Scherkräfte, Kavitation und die gleichzeitig auf die Dispersion einwirkende Turbulenz bewirken, daß das magnetische Material außerordentlich gleichmäßig und fein verteilt in der, die beschriebene Vorrichtung verlassenden Dispersion vorliegt. Agglomerate und Flokkulate werden vollständig abgebaut, die Dispersion weist erheblich größere Stabilität gegen Veränderungen wie Absetzen und Reagglomeration bei der Lagerung auf.

Die im Rahmen des erfindungsgemäßen Verfahrens durchgeführte Komprimierung und Entspannung der Dispersion wird zweckmäßigerweise im Anschluß an die übliche Fertigstellung der Dispersion vorgenommen. Eine so behandelte Dispersion ist dann auch nach einer mehrwöchigen Lagerung ohne Einbußen bei den elektroakustischen und mechanischen Eigenschaften der damit hergestellten Schichtmagnetogrammträger verwendbar. Vorteile bringt das erfindungsgemäße Verfahren jedoch auch dann, wenn die Dispersion nach einer gewissen Zeit der Lagerung erst unmittelbar vor dem Auftragen auf das Trägermaterial entsprechend homogenisiert wird.

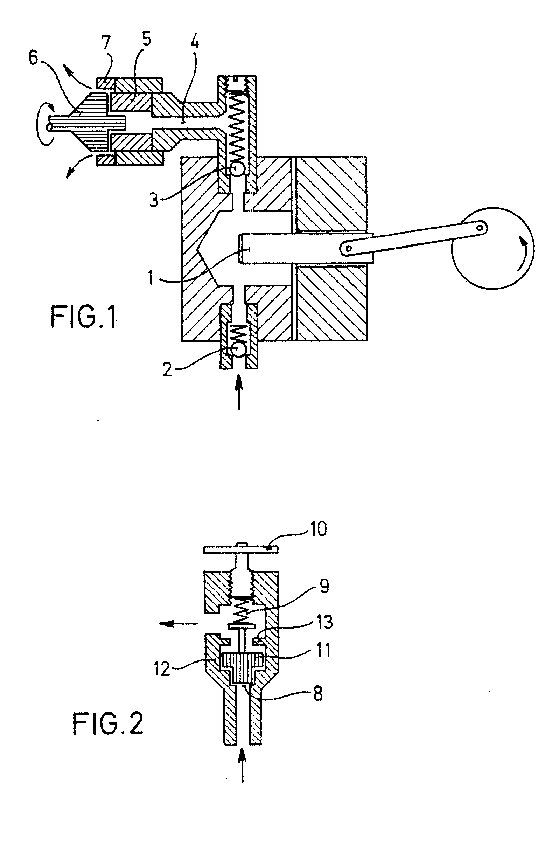

Das erfindungsgemäße Verfahren sei nachfolgend beispielhaft an Hand einer Vorrichtung in der in den Figuren 1 und 2 dargestellten Ausführungsform näher erläutert.

Fig. 1 zeigt eine entsprechende Homogenisierungseinrichtung, welche im wesentlichen aus einer Hochdruckpumpe, bevorzugt einer Kolbenpumpe, und einem Homogenisierkopf besteht. In Funktion wird die Dispersion durch die Rückwärtsbewegung des Kolbens 1 über das Saugventil 2 angesaugt. Das Saugventil schließt, während der Kolben die Vorwärtsbewegung ausführt. Nach einer Druckspitze öffnet das Druckventil 3 und die zu homogenisierende Dispersion erreicht über eine Druckbohrung 4 den Homogenisierkopf, in dem sie durch den Ringspalt zwischen einem äußeren runden Mantel 5 und einem Einsatz 6 entspannt wird. Das Produkt prallt gegen einen hinter dem Spalt angeordneten Prallring 7 und fließt ab. In einer besonderen Ausführungsform dieser Vorrichtung kann der Spalteinsatz 6 in Rotation versetzt werden.

Eine andere Ausgestaltung des Homogenisierkopfes zeigt Fig. 2. Hier sind Druckventil und Homogenisierkopf integriert. Das Ventil 8, dessen Öffnungsdruck durch eine komprimierbare Feder 9 von außen über eine Vorrichtung 10 verstellt werden kann, öffnet bei Erreichen einer Druckspitze. Die Dispersion fließt durch den Ringspalt, der durch den Ventileinsatz 11 und der Wandung 12 gebildet wird. Die Dispersion entspannt sich, schlägt gegen einen Prallring 13, wird umgelenkt und fließt ab.

Die in der beispielhaft beschriebenen Weise behandelten Dispersionen lassen sich nun ohne Qualitätsverlust längere Zeit lagern. Anschließend kann dann die Dispersion nach bekannten Verfahren mit Hilfe üblicher Beschichtungsmaschinen, z. B. mittels eines Linealgießers, auf den nichtmagnetisierbaren Träger aufgetragen werden. Als nichtmagnetische und nichtmagnetisierbare Träger lassen sich die üblichen Trägermaterialien verwenden, insbesondere Folien aus linearen Polyestern, wie Polyäthylenterephthalat, im allgemeinen in Stärken von 4 bis 100 μm und insbesondere von 6 bis 36 μm. Bevor die noch flüssige Beschichtungsmischung auf dem Träger getrocknet wird, was zweckmäßigerweise bei Temperaturen von 50 bis 90° C während 2 bis 5 Minuten geschieht, werden die anisotropen Magnetteilchen durch die Einwirkung eines Magnetfeldes entlang der vorgesehenen Aufzeichnungsrichtung und parallel zur Ebene des Trägermaterials orientiert. Anschließend können die Magnetschichten auf üblichen Maschinen durch Hindurchführen zwischen geheizten und polierten Walzen, gegebenenfalls bei Anwendung von Druck und Temperaturen von 50 bis 100° C, vorzugsweise 60 bis 80° C, geglättet und verdichtet werden. Die Dicke der Magnetschicht beträgt im allgemeinen 1 bis 20 μm, vorzugsweise 2 bis 10 μm.

Die gemäß der Erfindung erhaltene Schichtmagnetogrammträger zeichnen sich gegenüber solchen, die mittels Verfahren nach dem Stand der Technik erhalten werden, durch eine Verbesserung der magnetischen, mechanischen und elektroakustischen Eigenschaften aus. Dies gilt weitgehend auch dann, wenn die Dispersion des magnetischen Materials vor der weiteren Verarbeitung mehrere Wochen gelagert wird.

Die folgenden Beispiele und Vergleichsversuche sollen die Vorteile des erfindungsgemäßen Verfahrens verdeutlichen.

## Beispiel 1

Eine nach dem Stand der Technik in Kugelmühlen dispergierte Magnetdispersion, bestehend aus 28,7 Teilen eines nadelförmigen $\gamma$-$Fe_2O_3$ (Koerzitivfeldstärke 24,1 kA/m), 63,2 Teilen eines Gemisches aus gleichen Teilen Tetrahydrofuran und Dioxan, 2,2 Teile eines Copolymerisats aus 91 Teilen Vinylchlorid, 3 Teilen Vinylacetat und 6 Teilen Vinylalkohol, 5 Teilen eines thermoplastischen, löslichen Polyurethanelastomeren, hergestellt aus einem linearen Polyester, Butandiol-1,4 und Diphenylmethandiisocyanat, 0,7 Teilen Lecithin und 0,3 Teilen eines Dimethylsilikonöles, wird in einer Homogenisiervorrichtung gemäß Fig. 1 auf einen Ringspalt entspannt. Die Dispersion wird anschließend auf 12 μm Polyäthylenterephthalatfolie in einer Schichtdicke von 5 μm gleichmäßig aufgebracht und nach Passieren eines Magnetfeldes, das die Teilchen mit ihrer Längsachse in der Bandlaufrichtung ausrichtet, getrocknet. Die beschichtete Magnetfolie wird anschließend durch Hindurchziehen durch beheizte Stahlwalzen geglättet und in Bändern zu 3,81 mm Breite geschnitten.

An diesen Bändern werden folgende Eigenschaften bestimmt:

(1) Magnetwerte, und zwar die remanente Magnetisierung $M_R$ in [mT] bei einem angelegten Magnetfeld von 100 kA/m. Angegeben wird die Remanenz $M_R$ längs in Richtung der magnetischen Orientierung der Teilchen sowie der Richtfaktor RF, d. h. der Quotient der Remanenz längs zu der quer zur Ausrichtung.

(2) Elektroakustische Werte und zwar die Tiefen- bzw. Höhenaussteuerbarkeit, $A_T$ bzw. $A_H$ gemessen nach DIN 45 512.

(3) Die Rauhigkeit $R_{tm}$ in μm, definiert als der mittlere Abstand zwischen den 5 höchsten und 5 tiefsten Punkten des Rauhigkeitsprofils.

(4) Mechanische Eigenschaften

Auf ein Kassettenband wird auf eine Bandlänge von ca. 200 cm Länge ein Signal mit einer Frequenz von 10 kHz aufgezeichnet. Anschließend wird das Bandstück in Kontakt mit dem Magnetkopf zurückgespult und unter Aufzeichnung der Lesespannung gelesen. Nach diesem Vorgang wird das Bandstück erneut zurückgespult, die alte Aufzeichnung gelöscht und neuerlich mit einem Signal von 10 kHz beschrieben und erneut gelesen. Der Vorgang wird 50mal wiederholt. Dieser Test ist durch den stets neu erfolgenden Aufzeichnungsvorgang auch für die Feststellung geringer Kopfverschmutzung und die Neigung der Schicht zu mechanischer Instabilität sehr gut geeignet. Der Versuch wird bei Raumtemperatur durchgeführt. Als Maß für die Widerstandsfähigkeit des Bandes kann der Pegelabfall und die Menge des am Kopfspiegel des Aufzeichnungs/Wiedergabekopfes abgelagerten Abriebs herangezogen werden. Der Abrieb wird visuell durch Abziehen vom Kopfspiegel mit Klebeband und Aufkleben auf weißes Papier beurteilt und in einer 6stufigen Notenskala benotet, wobei durch Note 1 kein Abrieb und durch Note 6 sehr starker Abrieb gekennzeichnet wird.

Die Meßergebnisse sind in der Tabelle aufgeführt.

## Beispiel 2

Es wird wie in Beispiel 1 verfahren. An Stelle der Homogenisiervorrichtung nach Fig. 1 wird jedoch eine solche nach Fig. 2 eingesetzt. Die Meßergebnisse sind in der Tabelle aufgeführt.

## Beispiel 3

Es wird wie in Beispiel 1 verfahren, jedoch wird die Dispersion nach dem Homogenisieren und vor der Beschichtung 15 Tage ohne Rühren in einem verschlossenen Behälter gelagert. Die Meßergebnisse sind in der Tabelle aufgeführt.

## Beispiel 4

Es wird wie in Beispiel 2 verfahren, jedoch beträgt der Druck in der Homogenisiervorrichtung 294 bar. Die Meßergebnisse sind in der Tabelle angegeben.

## Vergleichsversuch 1

Die Dispersion nach Beispiel 1 wird nach dem Dispergieren in der Kugelmühle ohne weitere Behandlung weiterverarbeitet. Die Meßergebnisse sind in der Tabelle aufgeführt.

## Vergleichsversuch 2

Die in Beispiel 1 beschriebene Dispersion wird nach der Dispergierung in der Kugelmühle 15 Tage in einem geschlossenen Behälter gelagert und anschließend ohne Behandlung in einer Homogenisiervorrichtung gemäß Beispiel 1 weiterverarbeitet. Die Meßergebnisse sind in der Tabelle aufgeführt.

## Vergleichsversuch 3

Die in Beispiel 1 beschriebene Dispersion wird nach dem Dispergieren in der Kugelmühle in einer Apparatur zur Übertragung von Scherkräften gemäß DE-PS 2 119 568, Beispiel 1, nachbehandelt und anschließend wie zuvor beschrieben, weiterverarbeitet. Die Meßergebnisse sind in der Tabelle aufgeführt.

Tabelle

| | Beispiele | | | Vergleichsversuche | | |
|---|---|---|---|---|---|---|
| | 1 | 2 | 3 | 1 | 2 | 3 |
| **Magnetwerte** | | | | | | |
| Remanenz $M_R$ längs | 147 | 144 | 140 | 128 | 117 | 132 |
| Richtfaktor RF | 2,5 | 2,4 | 2,3 | 1,9 | 1,7 | 2,1 |
| **Elektroakustische Werte** | | | | | | |
| $A_T$ | +2,7 | +2,2 | +1,7 | 0 | −1,0 | +0,7 |
| $A_H$ | −1,6 | +2,0 | +1,4 | −0,2 | −0,7 | +0,5 |
| **Rauhigkeit** | | | | | | |
| Rtm | 0,08 | 0,06 | 0,10 | 0,15 | 0,17 | 0,12 |
| **Abriebtest** | | | | | | |
| Pegelabfall (dB) | −0,5 | 0 | −0,7 | 1,4 | 4,0 | 2,0 |
| **Kopfablagerungen** | | | | | | |
| Note | 1−2 | 1 | 1−2 | 2 | 2−3 | 2−3 |

## Patentansprüche

1. Verfahren zur Herstellung von Schichtmagnetogrammträgern durch Dispergieren einer Mischung von feinteiligem anisotropem magnetischem Material und Zusatzstoffen in einer Lösung eines Polymerbindemittels in organischen Lösungsmitteln, schichtförmiges Auftragen der Dispersion auf ein nichtmagnetisierbares Trägermaterial, Ausrichten des anisotropen magnetischen Materials mittels eines Magnetfeldes und Trocknen der aufgebrachten Schicht, dadurch gekennzeichnet, daß die Dispersion vor dem Auftragen auf das Trägermaterial auf Drücke zwischen 98 und 784 bar komprimiert und unmittelbar danach über Ventile unter gleichzeitigem Aufprallen auf ein Strömungshindernis (7, 13) entspannt wird.

2. Verfahren gemäß Anspruch 1, dadurch gekennzeichnet, daß das Ventil, durch welches die komprimierte Dispersion entspannt wird, als Düse ausgebildet ist.

3. Verfahren gemäß Anspruch 1, dadurch gekennzeichnet, daß das Ventil, durch welches die komprimierte Dispersion entspannt wird, als Ringspalt ausgebildet ist.

## Claims

1. A process for the manufacture of a magnetic recording medium by dispersing a mixture of particulate anisotropic magnetic material and additives in a solution of a polymeric binder in an organic solvent, applying a layer of the dispersion to a non-magnetizable base, orienting the anisotropic magnetic material by means of a magnetic field and drying the applied coating, characterized in that the dispersion, before application to the base, is subjected to a pressure of from 98 to 784 bar and immediately thereafter is released under pressure through a valve onto an impact member (7, 13).

2. A process as claimed in claim 1, characterized in that the valve through which the compressed dispersion is released is in the form of a nozzle.

3. A process as claimed in claim 1, characterized in that the valve through which the compressed dispersion is released is in the form of an annular gap.

## Revendications

1. Procédé de fabrication de support d'enregistrement magnétique en couches par dispersion d'un mélange de matière magnétique anisotrope, finement divisée et d'additifs dans une solution d'un liant polymére dans un solvant organique, dépôt sous forme de couche de la dispersion sur un matériau-support non magnétisable, alignement du matériau magnétique anisotrope au moyen d'un champ magnétique et séchage de la couche déposée, caractérisé par le fait que l'on comprime la dispersion avant son dépôt sur le matériausupport à des pressions comprises entre 98 et 784 bars et, directement après, on la détend par l'intermédiaire d'une soupape en la faisant rebondir en même temps sur un obstacle (7, 13) à l'ècoulement.

2. Procédé selon la revendication 1, caractérisé par le fait que la soupape, à travers laquelle la dispersion comprimée est détendue, est en forme de buse.

3. Procédé selon la révendication 1, caractérisé par le fait que la soupape à travers laquelle la dispersion est comprimée est agencée sous forme d'un interstice annulaire.

FIG.1

FIG.2

9